# FASCICULE DE BREVET EUROPEEN

(11) **EP 3 343 529 B1**
(45) Date de publication et mention de la délivrance du brevet: **20.02.2019**
(21) Numéro de dépôt: 17208351.1
(22) Date de dépôt: 19.12.2017
(51) Int. Cl.: G08C 17/02

(54) **DRÔNE À DIVERSITÉ DYNAMIQUE D'ANTENNES**
DROHNE MIT DYNAMISCHER ANTENNENDIVERSITÄT
DRONE WITH DYNAMIC ANTENNA DIVERSITY

(30) Priorité: 27.12.2016 FR 1670789
(43) Date de publication de la demande: 04.07.2018
(73) Titulaire: Parrot Drones, 75010 Paris (FR)
(72) Inventeur: GASNIER, Eric, 95390 Saint-Prix (FR); PROD'HOMME, Raphaël, 92160 Antony (FR)
(74) Mandataire: Dupuis-Latour, Dominique

(56) Documents cités:
- FR-A1- 2 947 401

## Description

L'invention concerne le pilotage à distance d'appareils motorisés, ci-après désignés généralement sous la dénomination de "drones", et plus précisément les antennes de radiocommunication utilisées par ces appareils pour leur pilotage à distance.

Il peut s'agir notamment de drones volants, à voilure tournante ou à voilure fixe. L'invention n'est toutefois pas limitée au pilotage et à l'échange de données avec des appareils volants, et elle peut s'appliquer aussi bien à des appareils roulants évoluant sur le sol sous le contrôle d'un opérateur distant, le terme de "drone" devant être entendu dans son acception la plus générale.

Un exemple typique de drone volant grand public est le *Bebop Drone* de Parrot (Paris, France), qui est un drone à voilure tournante de type quadricoptère, ou encore le *Disco,* également de Parrot, qui est un drone à voilure fixe de type aile volante. Un autre type de drone auquel peut s'appliquer l'invention est le jouet roulant et sauteur télécommandé *Jumping Sumo,* également de Parrot (toutes les désignations commerciales citées dans la présente description sont des marques déposées).

Les WO 2010/061099 A2, EP 2 364 757 A1, et EP 2 613 213 A1 (Parrot) décrivent le principe du pilotage d'un drone par l'intermédiaire d'un téléphone ou tablette multimedia à écran tactile et accéléromètres intégrés, exécutant un logiciel applicatif spécifique de télécommande tel que l'application pour mobile Parrot *FreeFlight.*

Le téléphone ou la tablette peuvent être éventuellement relayés par un équipement spécifique tel que le *Skycontroller* de Parrot, qui est une console interfacée avec le téléphone ou la tablette, se présentant sous forme d'un boitier muni de deux poignées avec des manches à balai et divers boutons destinés à permettre un pilotage ergonomique par l'utilisateur à la manière d'une console dédiée.

L'utilisateur peut également faire usage de lunettes de pilotage en immersion, dites "lunettes FPV" (*First Person View*).

La télécommande est pourvue de moyens de liaison radio avec le drone, par exemple de type réseau local WiFi (IEEE 802.11), pour l'échange bidirectionnel de données : i) du drone vers la télécommande pour la transmission de l'image video captée par la caméra et de paramètres de vol du drone, et ii) de la télécommande vers le drone pour l'envoi à ce dernier d'instructions de pilotage.

Divers aspects de la communication radio entre télécommande et drone sont décrits notamment par les EP 2 450 862 A1 et EP 3 020 460 A1 (Parrot).

On comprendra que la qualité de la liaison radio entre la télécommande et le drone est un paramètre essentiel, en particulier pour assurer une portée satisfaisante. De plus, les volumes de données transmis sont importants, notamment du fait du besoin très élevé en débit video de la liaison descendante. De fait, toute dégradation de la qualité de la liaison radio aura un impact sur la qualité de la transmission et sur la portée radio, avec un risque de perte sporadique affectant les données et les commandes échangées.

Au niveau du drone, la liaison radio utilise une ou plusieurs antennes incorporées au drone qui, en réception, captent les signaux de la liaison montante émis par l'équipement de télécommande et, en émission, rayonnent la puissance du circuit émetteur HF supportant la liaison descendante, notamment pour la transmission à la télécommande du flux video et des données de vol.

L'invention concerne précisément ces antennes et la chaine d'émission et réception radiofréquence (RF) qui leur est associée.

Une limitation importante réside dans les contraintes réglementaires applicables aux systèmes de communication RF tels que les systèmes de communication WiFi utilisés par les drones (ou tout autre système émetteur de puissance RF).

Par exemple, la règlementation actuellement applicable aux États-Unis dans la bande ISM 2,4 GHz prévoit : 1°) une limite de 30 dBm (1 mW) de puissance totale en sortie d'émetteur, et 2°) une limite de 36 dBm (4 mW) EIPR (*Equivalent Isotropically Radiated Power,* ou PIRE) de puissance rayonnée par l'antenne, cette seconde limite correspondant à la puissance propre de l'émetteur accrue du gain de l'antenne dans la direction de son lobe principal d'émission.

Les spécifications WiFi prévoient avantageusement la possibilité d'utiliser simultanément - dans des bandes différentes ou dans la même bande - plusieurs émetteurs et plusieurs antennes conformément à la technique dite MIMO (*Multiple Input Multiple Output,* entrées multiples sorties multiples), technique de multiplexage permettant des transferts de données à plus longue portée et avec un débit plus élevé qu'une technique de type SISO (*Single Input Single Output,* entrée unique sortie unique).

Le FR 2 947 401 A1 (Thales) décrit ainsi un drone muni d'une pluralité d'antennes sélectivement configurables pour assurer des transmissions de données en mode MIMO multi-antennes.

La difficulté vient du fait que, dans ce cas où plusieurs émetteurs délivrent simultanément un signal RF, le respect du seuil réglementaire de puissance rayonnée impose d'abaisser la puissance RF propre de chaque émetteur actif pour que la puissance RF totale globalement rayonnée reste inférieure au seuil imposé (36 dBm dans l'exemple ci-dessus).

Ainsi, pour deux antennes rayonnant simultanément, il faudra abaisser de moitié (- 3 dB) la puissance propre de chaque émetteur, qui ne devra pas délivrer en sortie plus de 27 dBm (0,5 mW).

De même, pour trois antennes rayonnant simultanément, il faudra diviser par trois (- 4,7 dB) la puissance propre de chaque émetteur, qui ne devra pas délivrer en sortie plus de 25,3 dBm (0,35 mW).

Et de même, pour quatre antennes rayonnant simultanément, il faudra diviser par quatre (- 6 dB) la puissance propre de chaque émetteur, qui ne devra pas délivrer en sortie plus de 24 dBm (0,25 mW).

L'idée de base de l'invention consiste, afin d'améliorer la qualité de transmission radio entre le drone et la télécommande, donc avec l'utilisateur, d'embarquer un nombre d'antennes (M antennes) supérieur au nombre d'émetteurs simultanément actifs (N émetteurs, au nombre d'au moins deux), et de ne sélectionner par des commutations appropriées que N antennes sur les M antennes équipant le drone.

Il est par exemple possible de prévoir M ≥ 3 antennes, typiquement M = 3 ou 4 antennes, pour N = 2 émetteurs, et donc ne sélectionner que deux antennes parmi trois, ou deux antennes parmi quatre.

Cette commutation est opérée dynamiquement, par exemple à intervalles de temps réguliers, de manière à modifier si nécessaire le schéma de commutation spécifique des N émetteurs aux M antennes pour que la configuration des antennes effectivement commutées reste optimale.

Dans l'exemple donné ci-dessus, en ne sélectionnant que deux antennes parmi trois (ou quatre) on peut obtenir par antenne une puissance rayonnée supérieure à celle d'un système conventionnel à trois (ou quatre) antennes fonctionnant simultanément en MIMO.

Toujours dans cet exemple, dans un système MIMO conventionnel à quatre antennes il serait nécessaire de réduire la puissance propre de chaque émetteur de 6 dB pour respecter la règlementation, tandis qu'avec la solution selon l'invention, toujours avec quatre antennes, la réduction nécessaire ne sera que de 3 dB car seules deux antennes parmi les quatre seront actives.

Cette reconfiguration dynamique du chemin de configuration permet ainsi de créer une "diversité dynamique" du réseau d'antennes tenant compte des déplacements du drone par rapport à la télécommande, alors même que ces déplacements produisent des modifications permanentes de l'orientation du drone (et donc de ses antennes), des conditions environnementales, de l'éloignement, etc., qui perturbent en permanence la liaison radio. La reconfiguration dynamique du réseau d'antennes permet alors de toujours conserver la meilleure condition de transmission RF qui maximise le débit de données et minimise le rapport signal/bruit, tout particulièrement lorsque les antennes du drone n'ont pas un rayonnement isotrope.

Plus précisément, l'invention propose à cet effet un drone comprenant, de manière en elle-même connue par exemple du FR 2 947 401 A1 précité, un corps de drone, un circuit contrôleur numérique, un étage émetteur RF comprenant un circuit processeur de bande de base apte à délivrer un signal RF à émettre, et M antennes fixes solidaires du corps de drone.

De façon caractéristique de l'invention, l'étage émetteur RF comprend en outre : un étage répartiteur RF recevant en entrée le signal RF à émettre et délivrant en sortie N signaux d'alimentation RF semblables, avec 2 ≤ N < M ; un circuit de commutation d'antennes, apte à coupler sélectivement chacun des N signaux d'alimentation RF à N antennes parmi les M antennes selon une pluralité de schémas de couplage différents ; et une logique de pilotage du circuit de commutation d'antennes, apte à déterminer dynamiquement l'un d'entre lesdits schémas de couplage en fonction d'un signal de sélection délivré par le circuit contrôleur.

Selon diverses caractéristiques subsidiaires avantageuses :
- la logique de pilotage du circuit de commutation d'antennes est apte à déterminer dynamiquement l'un d'entre lesdits schémas de couplage également en fonction d'un signal de synchronisation délivré par le circuit processeur de bande de base, de manière à inhiber l'application du signal de sélection au circuit de commutation d'antennes au moins pendant la durée d'émission d'une trame de signal RF à émettre ;
- lorsque N = 2 et M = 3, le circuit de commutation d'antennes est apte à coupler sélectivement : un premier signal d'alimentation RF à l'une ou bien à l'autre parmi une première antenne et une troisième antenne, et un second signal d'alimentation RF à l'une ou bien à l'autre parmi une seconde antenne et la troisième antenne ;
- dans ce même cas, la première antenne et la seconde antenne sont avantageusement des antennes latérales positionnées symétriquement de part et d'autre du corps de drone, et la troisième antenne est une antenne ventrale positionnée sous le corps de drone ;
- lorsque N = 2 et M = 4, le circuit de commutation d'antennes est apte à coupler sélectivement : un premier signal d'alimentation RF à l'une ou bien à l'autre parmi une première antenne et une troisième antenne, et un second signal d'alimentation RF à l'une ou bien à l'autre parmi une seconde antenne, la troisième antenne et une quatrième antenne ;
- l'étage répartiteur RF comprend N modules frontaux RF semblables, chacun recevant en entrée le signal RF à émettre et délivrant en sortie l'un des N signaux d'alimentation RF semblables ;
- l'un au moins des N signaux d'alimentation RF comprend une première composante de signal dans la bande 2,4 GHz duplexée avec une deuxième composante de signal dans la bande 5 GHz.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue générale montrant un drone piloté par un appareil de télécommande.
La Figure 2 est une vue en perspective de dessous du drone en vol, montrant notamment la géométrie du réseau d'antennes utilisé pour la mise en oeuvre de l'invention, dans cet exemple un réseau à trois antennes.
Les Figures 3a, 3b et 3c sont des diagrammes de rayonnement des antennes du drone illustré Figure 2, respectivement pour l'antenne droite, l'antenne ventrale et l'antenne gauche.
La Figure 4 est un synoptique de la chaine RF du drone mettant en oeuvre les enseignements de l'invention, dans une configuration à deux voies radio et trois antennes.
La Figure 5 est un synoptique de la chaine RF du drone mettant en oeuvre les enseignements de l'invention, dans une configuration à deux voies radio et quatre antennes.
La Figure 6 est un schéma illustrant un drone en vol, avec divers changements de position correspondant à la trajectoire de ce drone par rapport à un utilisateur statique au sol.
Les Figures 7a et 7b illustrent les variations du niveau de signal reçu par l'utilisateur lorsque le drone évolue de la manière illustrée Figure 4, respectivement avec et sans mise en oeuvre des enseignements de l'invention.

On va maintenant décrire un exemple de réalisation du dispositif de l'invention.

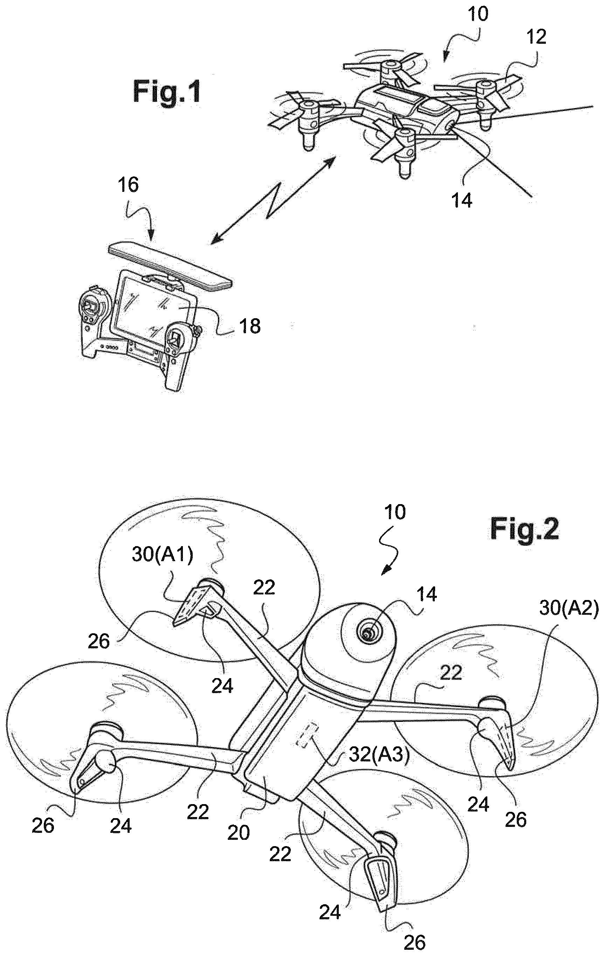

Sur la Figure 1, la référence 10 désigne de façon générale un drone, par exemple un quadricoptère tel que le modèle *Bebop* de Parrot. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle se dirige le drone.

Le drone 10 est piloté par un utilisateur au moyen d'un appareil de télécommande distant 16, ci-après "télécommande", pourvu d'un écran 18 configuré pour afficher l'image captée par la caméra 14 du drone. La télécommande 16 est par exemple le modèle *Skycontroller* de Parrot, sur lequel a été monté un *smartphone* (terminal mobile de poche) ou une tablette numérique multimedia à écran tactile de type standard, non modifié si ce n'est le chargement d'un logiciel applicatif spécifique (tel que l'application mobile *AR Free Flight* de Parrot) pour contrôler le pilotage du drone 10 et la visualisation des images prises par la caméra 14. L'écran 18 affiche, en superposition de l'image captée par la caméra 14, un certain nombre de paramètres de vol ainsi que des symboles permettant l'activation de commandes de pilotage (montée/descente, etc.) par simple contact d'un doigt de l'utilisateur sur ces symboles, et/ou en imprimant à la télécommande des inclinaisons selon des axes de roulis et de tangage pour faire avancer ou reculer le drone. Les actions de l'utilisateur sont interprétées par le logiciel applicatif spécifique, qui les transforme en signaux de commande à destination du drone.

La télécommande 16 est également pourvue de moyens de liaison radio avec le drone, par exemple de type réseau local WiFi, très avantageusement une liaison de type WiFi standard (IEEE 802.11n) de type bibande 2,4 GHz et 5 GHz (plus précisément 2,40 GHz-2,4835 GHz et 5,15 GHz-5,85 GHz) et MIMO, directement établie avec le drone.

Plus précisément, cette liaison radio sans fil est bidirectionnelle et comprend une liaison montante (de la télécommande vers le drone) et une liaison descendante (du drone vers la télécommande) pour transmettre des trames de données contenant :
- (de la télécommande vers le drone) les instructions de pilotage et de contrôle, envoyées à intervalles réguliers et de façon systématique, ainsi que diverses informations ou paramètres à destination du drone ;
- (du drone vers la télécommande) le flux video issu de la caméra ; et
- (du drone vers la télécommande) en tant que de besoin, des données de vol établies par le drone ou des indicateurs d'état tels que : niveau des batteries, phase de vol (décollage, stabilisation automatique, posé au sol, etc.), altitude, défaut détecté, etc.

Le réseau WiFi mis en oeuvre est avantageusement un réseau standard non modifié, ce qui permet de bénéficier des multiples fonctionnalités de la spécification WiFi : protection contre les collisions, encapsulation des données, gestion des accès au réseau, chiffrement et authentification, gestion du plan de fréquences, etc.

On notera toutefois que l'utilisation d'un WiFi standard n'est nullement limitative de l'invention, et que celle-ci s'applique aussi bien à tout système de transmission RF "propriétaire" réalisé selon des spécifications non standard, propres à un fabricant.

La Figure 2 illustre le drone 10 en vol. Ce drone comprend, dans l'exemple illustré d'un quadricoptère, un corps de drone 20 à partir duquel s'étendent quatre bras 22, avec deux bras avant et deux bras arrière. Chaque bras 22 porte à son extrémité distale un bloc-moteur 24 entrainant en rotation une hélice respective. Le bloc-moteur 24 se prolonge vers le bas par une extension formant pied 26 qui supporte le drone lorsque celui-ci est posé au sol.

Le drone comporte, de manière en elle-même connue par exemple sur le modèle *Bebop* précité de Parrot, deux antennes déportées 30 disposées dans les pieds avant. Chacune de ces antennes est par exemple réalisée sous forme imprimée sur une carte de circuit insérée dans un logement homologue ménagé dans le pied 26, avec une connectique appropriée permettant de relier l'antenne aux circuits RF situés dans le corps de drone 20. Cette configuration d'antennes déportées permet en particulier d'éloigner les antennes des masses métalliques contenues dans le corps de drone 20. Les antennes 30 présentent chacune un diagramme de rayonnement sectorisé sensiblement homogène à grande ouverture inclus dans un demi-espace hémisphérique, assurant une bonne couverture latérale de part et d'autre du drone compte tenu de la disposition symétrique des deux antennes 30.

Dans d'autres configurations, notamment mieux adaptées aux drones de type aile volante où il n'existe pas de bras s'étendant à partir d'un corps de drone, les deux antennes peuvent être disposées symétriquement dans le fuselage du drone, avec toutefois l'inconvénient que ces antennes sont plus sensibles aux éléments métalliques proches situés dans le fuselage, ce qui peut entrainer un diagramme de rayonnement moins homogène du fait de ces éléments perturbateurs.

Dans tous les cas, les deux antennes du drone sont couplées à des entrées/sorties RF respectives de la puce RF WiFi, les puces généralement utilisées étant munies de deux entrées/sorties RF identiques.

De façon conventionnelle, les antennes WiFi utilisées sont des antennes bibande, susceptibles de rayonner dans deux bandes différentes telles que les deux bandes WiFi 2,4 GHz et 5 GHz, notamment pour permettre un fonctionnement en MIMO où ces deux bandes sont utilisées concurremment.

Pour permettre ces émissions spatiales simultanées (et, de même, des réceptions simultanées), chaque entrée/sortie de la puce RF comporte alors quatre bornes, à savoir deux bornes d'émission (TX 2,4 et TX 5) et deux bornes de réception (RX 2,4 et RX 5).

Toutefois, la configuration connue décrite ci-dessus à deux émetteurs et deux antennes n'est pas toujours optimale.

En effet, lorsque le drone se trouve à la verticale de l'utilisateur ou à proximité de cette verticale (donc approximativement dans un cône dont le sommet serait situé là où se trouve l'utilisateur), le diagramme de rayonnement combiné des deux antennes présente de fortes irrégularités de gain, car cette direction correspond aux deux régions de bord des diagrammes de chacune des antennes. Ceci se traduit par des affaiblissements erratiques de la puissance rayonnée (ou du signal reçu), ce qui peut conduire ponctuellement à des communications très bruitées et à un affaiblissement du débit de la transmission des informations entre le drone et la télécommande.

Avec un drone à voilure tournante, cet inconvénient peut se présenter même lorsque le drone est assez loin de l'utilisateur : en effet, les changements rapides de vitesse horizontale du drone sont obtenus par des mouvements de cabrage, de basculement, etc., du drone par rapport à la verticale, qui modifient brusquement l'orientation du réseau d'antennes, et donc du diagramme de rayonnement, par rapport à la direction de l'utilisateur. De la sorte, dans certaines configurations de vol, l'utilisateur peut se trouver dans une direction particulière du diagramme de rayonnement présentant un creux ou de fortes irrégularités.

Pour pallier ces inconvénients, le point de départ de l'invention réside dans l'ajout d'une (ou plusieurs) antenne(s) supplémentaire(s), présentant notamment un diagramme de rayonnement avec un lobe principal orienté dans la direction du creux de gain ou des irrégularités du gain des deux premières antennes. De cette manière il est possible de compenser ces creux ou irrégularités et, globalement, d'établir un diagramme de rayonnement sensiblement isotrope.

Dans l'exemple illustré Figure 2, le drone a été muni d'une troisième antenne 32 disposée dans une région ventrale au centre du corps de drone 20. L'axe principal de rayonnement de cette antenne ventrale 32 est orienté verticalement et tourné vers le bas.

Cette configuration à trois antennes (ou plus) permet d'assurer dans toutes les configurations du drone une communication satisfaisante entre le drone et la télécommande distante, avec des performances radio homogènes en toutes circonstances.

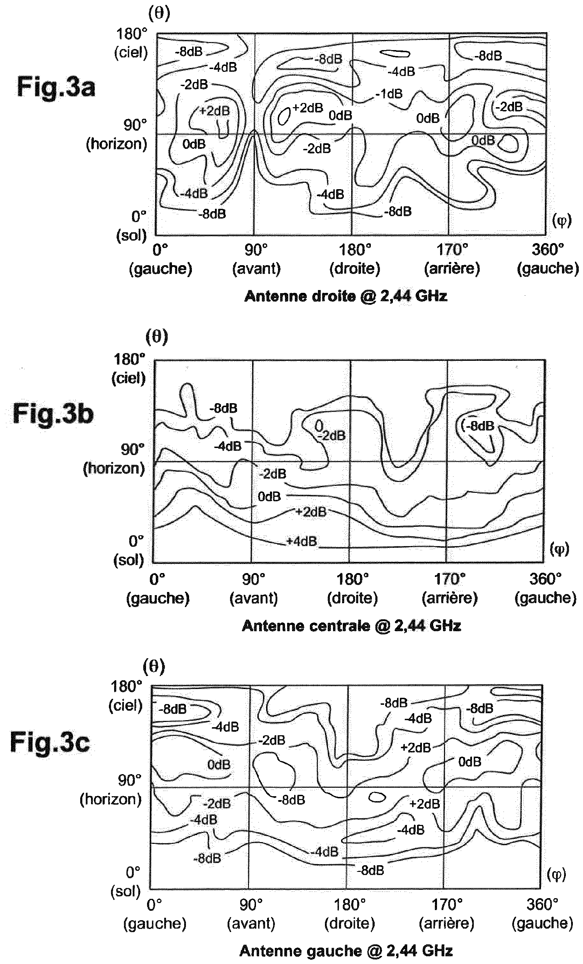

On se référera à cet égard aux Figure 3a, 3b et 3c, qui sont des diagrammes de rayonnement des antennes du drone illustré Figure 2, respectivement pour l'antenne 30 droite, l'antenne ventrale 32 et l'antenne 30 gauche. Ces diagrammes donnent pour chaque antenne, en courbes de niveau, le gain dans les différents directions de l'espace définies par l'angle de site θ et l'angle d'azimut ϕ. Comme on peut le constater, l'antenne ventrale 32 procure un gain important dans la direction du sol (Figure 3b, vers la direction θ = 0), tandis que les antennes latérales 30 (Figures 3a et 3c) présentent en revanche un faible gain dans cette direction. Inversement, pour des directions proches de l'horizon (θ = 90°), les antennes latérales 30 procurent de meilleures performances que l'antenne ventrale 32 en termes de gain.

Toutefois, si l'on augmente le nombre d'antennes et que chaque antenne est couplée à un émetteur/récepteur respectif, pour respecter les contraintes règlementaires de puissance maximale rayonnée totale il est nécessaire de diminuer en proportion la puissance propre de chaque émetteur. Ainsi, par exemple avec un gain d'antenne typique de 6 dBi, si l'on utilise deux émetteurs il faut diminuer la puissance unitaire de - 3 dB, avec trois émetteurs, de - 4,7 dB et avec quatre émetteurs, de - 6 dB.

L'idée de base de l'invention consiste, au lieu d'utiliser simultanément autant d'émetteurs que d'antennes, de ne sélectionner qu'un nombre réduit d'antennes, par exemple deux antennes parmi trois, ou deux antennes parmi quatre, et de n'alimenter que les seules antennes sélectionnées (donc de n'utiliser que deux émetteurs simultanément actifs dans cet exemple).

Ainsi, dans l'exemple cité plus haut, en n'utilisant que deux émetteurs simultanément actifs il ne sera nécessaire de diminuer la puissance unitaire que de - 3 dB en toutes circonstances car seules deux antennes parmi trois ou quatre seront actives à un instant donné, avec ainsi une puissance unitaire rayonnée par antenne supérieure à celle d'un système utilisant trois ou quatre antennes fonctionnant simultanément, en MIMO.

La commutation des antennes est opérée dynamiquement, en temps réel, en fonction d'un signal de sélection délivré par le microprocesseur du drone qui exécute un algorithme approprié déterminant quelles antennes doivent être sélectionnées à un instant donné.

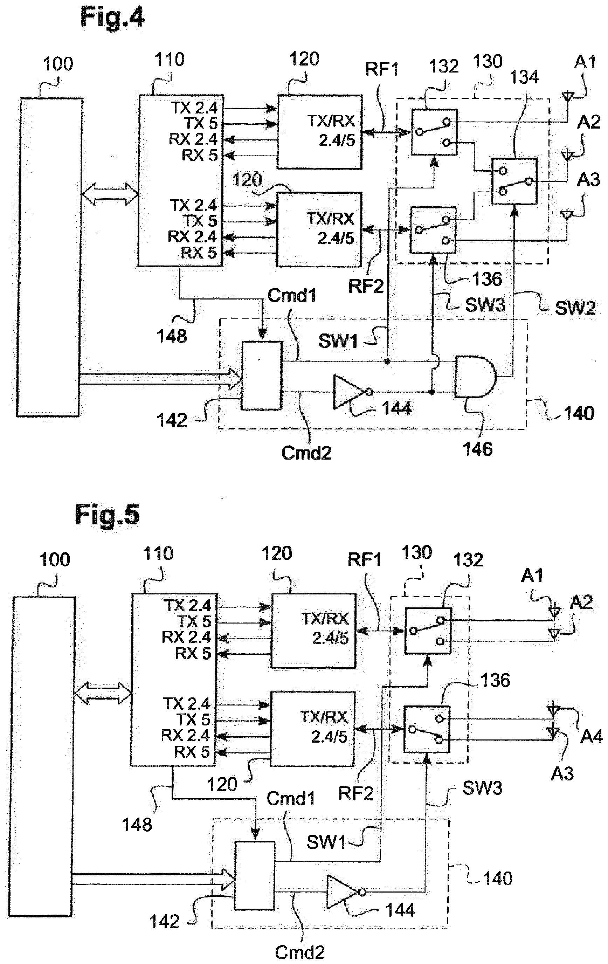

La Figure 4 est un synoptique de la chaine RF du drone mettant en oeuvre les enseignements de l'invention, dans une configuration à deux voies radio et trois antennes.

L'ensemble des circuits est commandé par un circuit contrôleur numérique 100, constitué par le microcontrôleur embarqué du drone pilotant notamment les diverses fonctions de contrôle de vol et de communication avec la télécommande.

Ce circuit contrôleur numérique 100 échange des informations avec un circuit processeur de bande de base 110, qui est un circuit en lui-même connu (par exemple un *chipset* Qualcomm *QCA6174*) et qui ne sera pas décrit en détail.

Le processeur de bande de base gère toutes les fonctions de contrôle radio telles que modulation du signal, codage/décodage, transposition de fréquence, etc. Il est d'une part interfacé au circuit contrôleur numérique 100 qui le pilote, et il est d'autre part muni d'un certain nombre de bornes pour son interfaçage au circuit RF d'émission/réception proprement dites. Dans le cas particulier d'une transmission en WiFi bibande, le circuit processeur de bande de base comporte des bornes de sortie (d'émission) TX 2.4 et TX 5 correspondant à chacune des deux bandes WiFi respectives 2,4 et 5 GHz, et des bornes d'entrée (de réception) RX 2.4 et RX 5 correspondant à ces deux mêmes bandes. De plus, ces quatre bornes d'entrée/sortie sont dédoublées, de manière à pouvoir être couplées à deux circuits identiques RF, notamment pour pouvoir assurer une transmission simultanée sur deux canaux RF couplés à deux antennes respectives.

Le circuit processeur de bande de base 110 est couplé à un étage répartiteur RF constitué de deux modules frontaux identiques 120 par les bornes d'entrée/sortie TX/RX que l'on vient de décrire.

Les modules frontaux 120 comprennent des puces de type *front-end* permettant de traiter des signaux analogiques à fréquence RF élevée, à partir des signaux de bande de base délivrés ou reçus par le circuit processeur de bande de base 110. Ils comprennent essentiellement, en émission, un amplificateur de puissance (PA) et, en réception, un amplificateur faible bruit (LNA). Ces modules frontaux 120 sont des circuits de type conventionnel, non modifiés, comprenant par exemple des puces de la famille Skyworks 85723, et ils ne seront pas décrits en détail.

Chacun des modules frontaux 120 émet (ou reçoit) un signal radiofréquence respectif RF1, RF2. Chacun des signaux RF1 ou RF2 émis ou reçus par un module frontal 120 comprend une première composante de signal dans la bande 2,4 GHz, duplexée avec une deuxième composante de signal dans la bande 5 GHz.

Dans une configuration conventionnelle, chacun des modules frontaux serait directement couplé à une antenne respective d'émission/réception pour la transmission WiFi, selon une configuration statique, invariable.. Dans la présente invention, le couplage entre les modules frontaux 120 et les antennes est opéré par l'intermédiaire d'un circuit spécifique 130 de commutation d'antennes assurant l'interfaçage entre, d'une part, les deux signaux radiofréquence RF1, RF2 et, d'autre part, trois antennes A1, A2, A3 (dans le mode de réalisation illustré Figure 4). Les antennes A1 et A2 peuvent être notamment les antennes déportées 30 situées à l'extrémité des bras de liaison au bloc propulseur du drone, l'antenne A3 étant l'antenne ventrale 32 située sous le corps de drone, en position centrale. Dans le mode de réalisation illustré, le circuit de commutation d'antennes 130 comprend un premier commutateur 132 recevant en entrée le signal RF1 et dirigeant celui-ci soit vers l'antenne A1, soit vers une premier pôle d'un deuxième commutateur 134. Un troisième commutateur 136 reçoit en entrée le signal RF2 et dirige celui-ci soit vers l'antenne A3, soit vers un second pôle du deuxième commutateur 134. Le deuxième commutateur 134 sélectionne l'un ou l'autre de ses pôles pour coupler celui-ci à l'antenne A2.

Les commutateurs RF utilisés par le circuit 130 sont des commutateurs de type en eux-mêmes connus (par exemple des puces de la famille Skyworks *13350*/*13320*) et ne seront pas décrits plus en détail.

Les états des trois commutateurs 132, 134 et 136 sont commandés par des signaux de commutation respectifs SW1, SW2, SW3 délivrés par une logique de pilotage 140 commandée par le circuit contrôleur numérique 100.

La logique de pilotage 140 comprend un circuit 142 recevant en entrée des signaux de commutation Cmd1 et Cmd2 délivrés par le circuit contrôleur numérique 100 en fonction d'un certain nombre de paramètres produits par un algorithme qui détermine quelles antennes doivent être sélectionnées. Pour cette sélection, l'algorithme peut notamment prendre en considération :
- la position du drone et l'orientation du drone (inclinaison plus ou moins forte compte tenu notamment des changements de vitesse horizontale) par rapport à l'utilisateur dans un repère absolu lié au sol : l'algorithme détermine alors les antennes du drone dont le diagramme de rayonnement présente la meilleure orientation par rapport à l'utilisateur ;
- la mesure du niveau de signal reçu (RSSI) par chacune des antennes captant les signaux en provenance de la télécommande : le RSSI mesuré donne en effet une information sur la qualité de la liaison radio entre drone et télécommande ;
- une sélection automatique des antennes selon une séquence qui peut être aléatoire et régulière, de manière à mesurer le RSSI sur chacune des antennes (cette sélection tenant compte de ce que, du fait de la présence du circuit de commutation 130, les antennes ne sont jamais toutes simultanément couplées aux étages récepteurs de la chaine RF).

Par ailleurs, le circuit contrôleur numérique 100 n'étant pas synchronisé avec le circuit processeur de bande de base 110 et les modules frontaux 120, il convient de synchroniser la commutation des antennes sur les trames émises ou reçues afin ne pas risquer de couper ces trames pendant la transmission.

Pour ce faire, la logique de pilotage 140 est couplée au circuit processeur de bande de base 110 par une liaison 148 assurant la synchronisation entre les signaux envoyés par le circuit contrôleur numérique 100 et les trames traitées en émission/réception par le circuit processeur de bande de base 110.

Dans le mode de réalisation illustré Figure 4, la logique de pilotage 140 comporte un inverseur 144 recevant en entrée le signal Cmd2, et une porte ET 146 recevant sur l'une de ses entrées le signal Cmd1 et sur l'autre entrée le signal Cmd2 après inversion. Le signal de sélection SW1 du commutateur 132 correspond au signal Cmd1, le signal de commutation SW3 du commutateur 136 correspond au signal Cmd2 inversé, et le signal SW2 de commande du commutateur 134 correspond à la sortie de la porte 146.

La table de vérité correspondante est la suivante :

**Table de vérité pour 3 antennes / 2 émetteurs**

| Cmd1 | Cmd2 | SW1 | SW2 | SW3 | RF1 | RF2 |
|---|---|---|---|---|---|---|
| 1 | 1 | 1 | 0 | 0 | ANT 1 | ANT 3 |
| 0 | 1 | 0 | 0 | 0 | ANT 2 | ANT 3 |
| 1 | 0 | 1 | 1 | 1 | ANT 1 | ANT 2 |
| 0 | 0 | 0 | 0 | 1 | ANT 2 | - |

Bien entendu, les différents schémas de couplage possibles entre, d'une part, les deux voies RF1 et RF2 et, d'autre part, les trois antennes A1, A2 et A3 correspondant à cette table de vérité ne sont pas limitatifs ; d'autres configurations de couplage sont aussi bien envisageables, compte tenu notamment de la géométrie particulière des différentes antennes du drone, de leur emplacement sur celui-ci et de leur diagramme de rayonnement propre.

La Figure 5 est un synoptique illustrant une variante dans laquelle le drone comporte non plus trois, mais quatre antennes différentes A1, A2, A3, A4 sélectivement commutables pour permettre leur couplage aux deux voies d'émission/réception des signaux RF1 et RF2. Les éléments portant les mêmes références numériques que sur la Figure 4 assurent des fonctions identiques, et ne seront pas décrits plus en détail.

Dans le cas de la Figure 4, le circuit de commutation d'antennes 130 ne comporte que deux commutateurs 132 et 136. Le commutateur 132 reçoit en entrée le signal RF1 et couple celui-ci soit à une première antenne A1 soit à une deuxième antenne A2, tandis que le commutateur 136 couple le signal RF2 soit à une troisième antenne A3 soit à une quatrième antenne A4. Les commutateurs 132 et 136 sont contrôlés par les signaux de sélection SW1 et SW3 délivrés par la logique de pilotage 144 de la même manière que ce qui a été décrit à propos de la Figure 4.

La table de vérité est la suivante :

**Table de vérité pour 4 antennes / 2 émetteurs**

| Cmd1 | Cmd2 | SW1 | SW3 | RF1 | RF2 |
|---|---|---|---|---|---|
| 1 | 1 | 1 | 0 | ANT 1 | ANT 3 |
| 0 | 1 | 0 | 0 | ANT 2 | ANT 3 |
| 1 | 0 | 1 | 1 | ANT 1 | ANT 4 |
| 0 | 0 | 0 | 1 | ANT 2 | ANT 4 |

Bien entendu, cette configuration de schémas de couplage n'est pas limitative, et d'autres configurations à deux voies RF et quatre antennes peuvent être aussi bien envisagées tout en restant dans le cadre de l'invention.

De la même façon, l'invention n'est pas limitée au couplage de N = 2 voies RF (signaux RF1 et RF2 dans les exemples décrits) à M = 3 ou 4 antennes (antennes A1-A3 ou A1-A4 dans les exemples décrits), mais peut être généralisée au couplage de N voies RF à M antennes, avec 2 ≤ N < M, ce couplage étant un couplage dynamique modifiable en temps réel. Le couplage est modifié en fonction de signaux de sélection délivrés par une logique de pilotage commandée par le circuit contrôleur numérique du drone sur la base d'un algorithme de recherche et de sélection du schéma optimal de couplage des voies RF aux antennes.

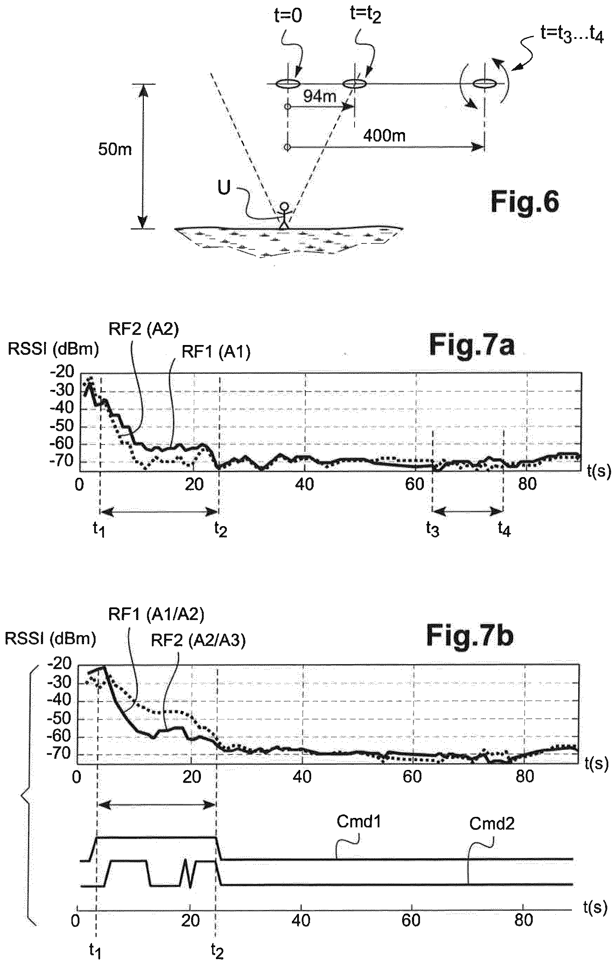

Les Figures 6, 7a et 7b illustrent un exemple de mise en oeuvre du mode de réalisation de l'invention représenté Figure 4 et décrit ci-dessus.

La Figure 6 est un schéma illustrant un drone en mouvement, avec divers changements de position correspondant à la trajectoire de ce drone par rapport à un utilisateur statique au sol. Les Figures 7a et 7b illustrent les variations du niveau de signal reçu par l'utilisateur lorsque le drone évolue comme illustré Figure 6, respectivement avec et sans mise en oeuvre des enseignements de l'invention.

La Figure 6 illustre l'exemple d'un drone volant à une altitude d'environ 50 m au-dessus d'un utilisateur U équipé d'une télécommande de pilotage du drone. À un instant t = 0 le drone se trouve à la verticale de l'utilisateur, puis il se déplace en vol horizontal, à altitude constante, vers la droite en s'éloignant de ce fait de l'utilisateur. Cette trajectoire se poursuit sur une distance d'environ 400 m, jusqu'à t = t3, où le drone s'immobilise et effectue une rotation sur lui-même jusqu'à un temps t = t4.

La Figure 7a illustre le niveau du signal reçu par le drone (indicateur RSSI) des émissions produites par la télécommande de l'utilisateur sur les deux voies RF1 et RF2, dans une configuration conventionnelle où les deux antennes A1 et A2 (par exemple les antennes 30 sur la représentation de la Figure 2) sont directement couplées aux voies RF respectives RF1 et RF2.

Dans cette configuration statique des antennes (la voie RF1 est toujours couplée à l'antenne A1 et la voie RF2 est toujours couplée à l'antenne A2), on observe une diminution rapide du niveau de signal reçu entre les instants t1 et t2 lorsque le drone, bien que relativement proche en distance de l'utilisateur, s'éloigne de celui-ci latéralement par rapport à la verticale.

La Figure 7b illustre le niveau (RSSI) du signal reçu par le drone dans la même phase de vol, mais avec mise en oeuvre de la sélection dynamique de trois antennes, selon l'invention.

Les chronogrammes ajoutés en bas de la Figure 7b indiquent les valeurs des signaux de commande Cmd1 et Cmd2 produits par la logique de pilotage 140 pour sélectionner dynamiquement un schéma de couplage des trois antennes aux deux voies RF, en fonction d'instructions élaborées par le circuit contrôleur numérique 100 et transmises au circuit de commutation d'antennes 140.

À l'instant t = 0, le drone utilise l'antenne A1 sur la voie RF1 et l'antenne A2 sur la voie RF2 (configuration initiale par défaut). À t = t1, le circuit contrôleur numérique décide d'utiliser l'antenne A3 (correspondant à l'antenne ventrale 32) pour la voie RF2, au lieu de l'antenne A2, car cette configuration procure une meilleure transmission. Cette configuration est maintenue jusqu'à l'instant t = t2. Pour la voie RF1, entre t1 et t2 cette voie est couplée soit à l'antenne A1 soit à l'antenne A2 (qui n'est plus utilisée pour la voie RF2), selon les circonstances et les niveaux des signaux reçus.

À partir de t = t2, le circuit contrôleur numérique décide d'utiliser l'antenne A1, qui est à nouveau couplée à la voie RF1, l'antenne A2 étant alors couplée à la voie RF2. Concrètement, ce changement de configuration correspond à peu près à un éloignement du drone d'environ 94 m par rapport à la verticale de l'utilisateur.

Si l'on compare les niveaux de signal RSSI respectifs sur les Figures 7a (état de la technique) et 7b (invention), on constate que le niveau du signal reçu est notablement augmenté dans la période comprise entre t1 et t2, qui correspond globalement à une phase de vol où le drone se situe par rapport à l'utilisateur dans un cône d'environ 94/50 de demi-angle au sommet.

## Revendications

1. Un drone (10), comprenant :
- un corps de drone (20) ;
- un circuit contrôleur numérique (100) ;
- un étage émetteur RF comprenant un circuit processeur de bande de base (110) apte à délivrer un signal RF à émettre ; et
- M antennes fixes (A1, A2, A3) solidaires du corps de drone,
**caractérisé en ce que** l'étage émetteur RF comprend en outre :
- un étage répartiteur RF (120), recevant en entrée le signal RF à émettre et délivrant en sortie N signaux d'alimentation RF semblables (RF1, RF2), avec 2 ≤ N < M ;
- un circuit de commutation d'antennes (130), apte à coupler sélectivement chacun des N signaux d'alimentation RF (RF1, RF2) à N antennes parmi les M antennes (A1, A2, A3) selon une pluralité de schémas de couplage différents ; et
- une logique (140) de pilotage du circuit de commutation d'antennes, apte à déterminer dynamiquement l'un d'entre lesdits schémas de couplage en fonction d'un signal de sélection délivré par le circuit contrôleur.

2. Le drone de la revendication 1, dans lequel la logique (140) de pilotage du circuit de commutation d'antennes est apte à déterminer dynamiquement l'un d'entre lesdits schémas de couplage également en fonction d'un signal de synchronisation (148) délivré par le circuit processeur de bande de base (110), de manière à inhiber l'application du signal de sélection au circuit de commutation d'antennes au moins pendant la durée d'émission d'une trame de signal RF à émettre.

3. Le drone de la revendication 1, dans lequel N = 2 signaux d'alimentation RF et M = 3 antennes.

4. Le drone de la revendication 3, dans lequel le circuit de commutation d'antennes (130) est apte à coupler sélectivement :
• un premier signal d'alimentation RF à l'une ou bien à l'autre parmi une première antenne et une troisième antenne, et
• un second signal d'alimentation RF à l'une ou bien à l'autre parmi une seconde antenne et la troisième antenne.

5. Le drone de la revendication 3, dans lequel la première antenne et la seconde antenne sont des antennes latérales (30) positionnées symétriquement de part et d'autre du corps de drone (20), et la troisième antenne est une antenne ventrale (32) positionnée sous le corps de drone (20).

6. Le drone de la revendication 1, dans lequel N = 2 signaux d'alimentation RF et M = 4 antennes.

7. Le drone de la revendication 6, dans lequel le circuit de commutation d'antennes (130) est apte à coupler sélectivement :
• un premier signal d'alimentation RF à l'une ou bien à l'autre parmi une première antenne et une troisième antenne, et
• un second signal d'alimentation RF à l'une ou bien à l'autre parmi une seconde antenne, la troisième antenne et une quatrième antenne.

8. Le drone de la revendication 1, dans lequel l'étage répartiteur RF comprend N modules frontaux RF (120) semblables, chacun recevant en entrée le signal RF à émettre (TX 2.4, TX 5) et délivrant en sortie l'un des N signaux d'alimentation RF semblables (RF1, RF2).

9. Le drone de la revendication 1, dans lequel l'un au moins des N signaux d'alimentation RF comprend une première composante de signal dans la bande 2,4 GHz duplexée avec une deuxième composante de signal dans la bande 5 GHz.

## Patentansprüche

1. Drohne (10), umfassend:
- einen Drohnenkörper (20);
- eine digitale Steuerungsschaltung (100);
- eine HF-Senderstufe, die eine Baseband-Prozessorschaltung (110) umfasst, die in der Lage ist, ein zu sendendes HF-Signal auszugeben; und
- M feste Antennen (A1, A2, A3), die mit dem Drohnenkörper fest verbunden sind,
**dadurch gekennzeichnet, dass** die HF-Senderstufe ferner Folgendes umfasst:
- eine HF-Verteilerstufe (120), die am Eingang das zu sendende HF-Signal empfängt und am Ausgang N ähnliche HF-Versorgungssignale (RF1, RF2) ausgibt, wobei 2 ≤ N < M;
- eine Antennen-Umschaltungsschaltung (130), die in der Lage ist, selektiv jedes der N HF-Versorgungssignale (RF1, RF2) mit N Antennen aus den M Antennen (A1, A2, A3) gemäß einer Mehrzahl verschiedener Kopplungsschemata zu koppeln; und
- eine Steuerungslogik (140) für die Antennen-Umschaltungsschaltung, die in der Lage ist, dynamisch eines unter den Kopplungsschemata in Abhängigkeit eines von der Steuerungsschaltung ausgegebenen Auswahlsignals zu ermitteln.

2. Drohne nach Anspruch 1, wobei die Steuerungslogik (140) für die Antennen-Umschaltungsschaltung in der Lage ist, dynamisch eines unter den Kopplungsschemata auch in Abhängigkeit eines von der Baseband-Prozessorschaltung (110) ausgegebenen Synchronisierungssignals (148) zu ermitteln, derart, dass die Anwendung des Auswahlsignals auf die Antennen-Umschaltungsschaltung wenigstens während der Sendedauer eines auszugebenden HF-Signal-Frames verhindert wird.

3. Drohne nach Anspruch 1, wobei N = 2 HF-Versorgungssignale und M = 3 Antennen.

4. Drohne nach Anspruch 3, wobei die Antennen-Umschaltungsschaltung (130) in der Lage ist, selektiv:
• ein erstes HF-Versorgungssignal an die eine oder an die andere aus einer ersten Antenne und einer dritten Antenne zu koppeln und
• ein zweites HF-Versorgungssignal an die eine oder an die andere aus einer zweiten Antenne und einer dritten Antenne zu koppeln.

5. Drohne nach Anspruch 3, wobei die erste Antenne und die zweite Antenne seitliche Antennen (30) sind, die symmetrisch auf beiden Seiten des Drohnenkörpers (20) positioniert sind, und die dritte Antenne eine bauchseitige Antenne (32) ist, die unter dem Drohnenkörper (20) positioniert ist.

6. Drohne nach Anspruch 1, wobei N = 2 HF-Versorgungssignale und M = 4 Antennen.

7. Drohne nach Anspruch 6, wobei die Antennen-Umschaltungsschaltung (130) in der Lage ist, selektiv:
• ein erstes HF-Versorgungssignal an die eine oder an die andere aus einer ersten Antenne und einer dritten Antenne zu koppeln und
• ein zweites HF-Versorgungssignal an die eine oder an die andere aus einer zweiten Antenne, der dritten Antenne und einer vierten Antenne zu koppeln.

8. Drohne nach Anspruch 1, wobei die HF-Verteilerstufe N ähnliche HF-Frontmodule (120) umfasst, wobei jedes am Eingang das zu sendende HF-Signal (TX 2.4, TX 5) empfängt und am Ausgang eines der N ähnlichen HF-Versorgungssignale (RF1, RF2) ausgibt.

9. Drohne nach Anspruch 1, wobei wenigstens eines der N HF-Versorgungssignale eine erste Signalkomponente in der Bandbreite 2,4 GHz umfasst, die mit einer zweiten Signalkomponente in der Bandbreite 5 GHz duplexiert ist.

## Claims

1. A drone (10), comprising:
- a drone body (20);
- a digital controller circuit (100);
- an RF transmitter stage comprising a baseband processor circuit (110) adapted to issue an RF signal to be transmitted; and
- M fixed antennas (A1, A2, A3) integral with the drone body,
**characterized in that** the RF transmitter stage further comprises:
- an RF dispatcher stage (120), receiving as an input the RF signal to be transmitted and issuing as an output N similar RF supply signals (RF1, RF2), with 2 ≤ N < M ;
- an antenna switching circuit (130), adapted to selectively couple each of the N RF supply signals (RF1, RF2) to N antennas out of the M antennas (A1, A2, A3) according to a plurality of different coupling schemes; and
- a logic (140) for piloting the antenna switching circuit, adapted to dynamically determine one of said coupling schemes as a function of a selection signal issued by the control circuit.

2. The drone of claim 1, wherein the logic (140) for piloting the antenna switching circuit is adapted to dynamically determine one of said coupling schemes also as a function of a synchronisation signal (148) issued by the baseband processor circuit (110), so as to inhibit the application of the selection signal to the antenna switching circuit at least for the duration for an RF signal frame to be transmitted.

3. The drone of claim 1, wherein N = 2 RF supply signals and M = 3 antennas.

4. The drone of claim 3, wherein the antenna switching circuit (130) is adapted to selectively couple:
• a first RF supply signal to either one of a first antenna and a third antenna, and
• a second RF supply signal to either one of a second antenna and the third antenna.

5. The drone of claim 3, wherein the first antenna and the second antenna are lateral antennas (30) positioned symmetrically on either side of the drone body (20), and the third antenna is a belly antenna (32) positioned under the drone body (20).

6. The drone of claim 1, wherein N = 2 RF supply signals and M = 4 antennas.

7. The drone of claim 6, wherein the antenna switching circuit (130) is adapted to selectively couple:
• a first RF supply signal to either one of a first antenna and a third antenna, and
• a second RF supply signal to either one of a second antenna, the third antenna and a fourth antenna.

8. The drone of claim 1, wherein the RF dispatcher stage comprises N similar front-end RF modules (120), each receiving as an input the RF signal to be transmitted (TX 2.4, TX 5) and issuing as an output one of the N similar RF supply signals (RF1, RF2).

9. The drone of claim 1, wherein one at least of the N RF supply signals comprises a first signal component in the 2.4 GHz band duplexed with a second signal component in the 5 GHz band.
